# EUROPÄISCHE PATENTSCHRIFT

(11) **EP 1 774 631 B1**
(45) Veröffentlichungstag und Bekanntmachung des Hinweises auf die Patenterteilung: **08.04.2009**
(21) Anmeldenummer: 05776223.9
(22) Anmeldetag: 08.07.2005
(51) Int. Cl.: H02G 11/02, A47J 37/12, B65H 75/36

(54) **GEHÄUSETEIL FÜR EIN ELEKTRISCHES HAUSHALTSGERÄT**
HOUSING PART FOR AN ELECTRIC HOUSEHOLD APPLIANCE
ELEMENT BOITIER POUR APPAREIL ELECTROMENAGER

(30) Priorität: 22.07.2004 ES 200401867
(43) Veröffentlichungstag der Anmeldung: 18.04.2007
(73) Patentinhaber: BSH Bosch und Siemens Hausgeräte GmbH, 81739 München (DE)
(72) Erfinder: KLEMM, Jochen, E-31200 Estella (ES); MORENO IGOA, Juan Antonio, E-31820 Echarri-Aranaz (ES)
(86) Internationale Anmeldenummer: PCT/EP2005/053288
(87) Internationale Veröffentlichungsnummer: WO 2006/008249

(56) Entgegenhaltungen:
- EP-A- 0 063 217
- EP-A- 0 541 320
- EP-A- 0 679 600
- WO-A-03/030325
- US-A- 5 533 797

## Beschreibung

Die vorliegende Erfindung betrifft ein Gehäuseteil für ein elektrisches Haushaltsgerät und ein Herstellungsverfahren für ein Gehäuseteil eines elektrischen Haushaltsgeräts.

Elektrische Haushaltsgeräte, wie beispielsweise Friteusen, Back-, Brat- oder Grillgeräte, Rührgeräte, Küchenmaschinen, Staubsauger etc. weisen allgemein ein Netzanschlusskabel vorgegebener Länge auf, an dessen distalen Ende ein Netzanschlussstecker zum Anschließen an eine Netzsteckdose angeordnet ist. Vielfach ist der Abstand zwischen dem elektrischen Haushaltsgerät und der Netzsteckdose geringer als die Länge des Netzanschlusskabels. Um zu vermeiden, dass das Netzanschlusskabel lose im Raum herumliegt und Schlaufen bildet, hat es sich als vorteilhaft erwiesen, bei elektrischen Haushaltsgeräten einen Kabelraum zur Aufnahme eines nicht genutzten Abschnitts des Netzanschlusskabels vorzusehen.

Ferner ist bekannt, den Kabelraum derart groß auszubilden, dass darin auch die gesamte Kabellänge untergebracht werden kann, für den Fall, dass das Netzanschlusskabel nicht an einer Netzsteckdose angeschlossen ist. Um zu erreichen, dass dabei der Netzanschlussstecker nicht aus dem Gerätegehäuse hervorsteht, ist oftmals ein zurückversetztes Fach in dem Gehäuse zur Unterbringung des Netzanschlusssteckers vorgesehen.

Ein Elektrogerät mit einem Netzanschlusskabel und einer Kabelaufnahme ist beispielsweise aus der EP 0 679 600 A2 bekannt. Bei der beschriebenen Ausführungsform ist die Kabelaufnahme hinter einer Gehäusewand angeordnet und weist einen scheibenartigen Hohlraum auf. Die Tiefe des Hohlraums ist geringer als ein zweifacher Durchmesser des aufzunehmenden Kabels. Das Kabel ist über eine breitseitige, im Wesentlichen zentrale Öffnung aus der Kabelaufnahme herausziehbar bzw. in diese einführbar. Die beschriebene Anordnung bewirkt, dass sich das Kabel beim Einschieben bzw. beim Herausziehen von selbst innerhalb des Hohlraumes spiralförmig anordnet.

Ferner sind in EP 0 063 217 A1 und DE 27 29 259 A1 elektrische Geräte, insbesondere Staubsauger, mit einer Kabelaufnahme beschrieben. Bei EP 0 063 217 A1 sind eingangsseitig an der Kabelaufnahme Walzen mit umfangsseitigen Nuten angeordnet, zwischen denen ein Netzanschlusskabel reibungsschlüssig eingeklemmt wird, wobei mindestens eine der Walzen mit einem Drehantrieb zum Einzug des Netzanschlusskabels gekuppelt ist. DE 27 29 259 A1 betrifft eine Anordnung, die ein einfaches und schnelles Montieren und Auswechseln des Netzanschlusskabels ermöglicht. Hierzu ist an dem Gehäuse eine große Durchführöffnung vorgesehen, durch welche ein Netzanschlussstecker des Netzanschlusskabels durchführbar ist. Auf die Durchführöffnung ist ein Verschlussteil aufgesteckt, das eine Öffnung mit geringfügig größerer lichter Weite als das Netzanschlusskabel aufweist, wobei das Netzanschlusskabel während des Betriebs des Gerätes durch diese Öffnung geführt wird. Zum Auswechseln des Netzanschlusskabels wird das Verschlussteil abgenommen, so dass durch die große Durchführöffnung Zugang zu der Kabelaufnahme ermöglicht wird.

DE 201 09 574 U1 beschreibt ein elektrisches Bratgerät, mit einem Körper, der ein Gehäuse und einen Behälter umfasst, zwischen denen eine Isolierkammer ausgebildet ist. Unter dem Körper ist ein Sockel positioniert, der abnehmbar mit dem Körper verbunden ist. An dem Sockel sind eine Steuereinheit, eine Schalttafel und eine Steckdose angeordnet. Ferner ist gezeigt, dass ein elektrisches Netzanschlusskabel des Bratgeräts durch den Sockel zu der Schalttafel verläuft.

Aus EP 1 138 238 A1 ist ein Haushaltsgerät mit einem am Gerätegehäuse vorgesehenen Kabelraum bekannt, wobei ein Netzanschlusskabel über eine Einführöffnung seitlich in einen Aufnahmebereich des Kabelraums einführbar ist. In dem Kabelraum ist nach der Einführöffnung ein Ablenkelement angeordnet, welches das Netzanschlusskabel beim Einführen zum Inneren des Kabelraums hin umlenkt. Der Kabelraum wird durch das Gerätegehäuse und ein Deckelteil gebildet, wobei das Deckelteil lösbar mit dem Gerätegehäuse verbunden wird, so dass ein Benutzer durch Öffnen des Deckelteils Zugang zu dem Innenraum des Kabelraums erhält.

Die internationale Offenlegungsschrift WO 03/030325 A2 offenbart eine Vorrichtung zur Aufnahme der überschüssigen Länge eines Elektrokabels an einem Haushaltsgerät, die aus einem Hohlraum besteht, der in einem Gehäuse des Geräts ausgebildet ist, und einem Deckel, durch den der Hohlraum bis auf eine Kabelaustrittsöffnung geschlossen wird. Der Deckel wird über Rastnasen lösbar mit dem Gehäuse verbunden.

Aus der Europäischen Offenlegungsschrift EP 0541320 A2 ist ein Kabelhalter, z.B. für ein Bügeleisen, bekannt, der ein zweiteiliges Gehäuse mit einem Oberteil und einem Unterteil umfasst, in das das Kabel eingeschlossen wird. Dabei wird das Kabel auf eine in dem Gehäuse befindliche Rolle aufgerollt.

Schließlich offenbart das US-Patent US 5,533,797 einen Mixer, der im Bodenbereich mit einer Kammer zur Aufnahme einer überschüssigen Länge eines Elektrokabels ausgestattet ist. Die Kammer wird durch eine aufgesetzte Bodenplatte des Mixers verschlossen.

Der vorliegenden Erfindung liegt die Aufgabe zugrunde, auf kostengünstige und einfache Weise einen Kabelraum für ein elektrisches Haushaltsgerät zu realisieren, der zur Unterbringung mindestens eines Abschnittes eines Netzanschlusskabels des elektrischen Haushaltsgerätes geeignet ist.

Die genannte Aufgabe wird gemäß der Erfindung durch ein Gehäuseteil nach Anspruch 1 und durch ein Herstellungsverfahren für ein Gehäuseteil nach Anspruch 13 gelöst. Vorteilhafte Ausführungsformen sind den Unteransprüche zu entnehmen.

Ein Gedanke der Erfindung liegt darin, Begrenzungselemente, die den Kabelraum bilden und diesen allseitig begrenzen, zusammen mit einem Gehäuseteil für das elektrische Haushaltsgerät einteilig aus Kunststoff auszubilden. Aufgrund dieser Anordnung ist das Gehäuseteil mitsamt den Begrenzungselementen des Kabelraumes in einem einzigen Kunststoff-Formungsgang, insbesondere in einem Spritzguss-Formungsgang, herstellbar, so dass Herstellungskosten und Materialkosten gespart werden. Ferner kann ein Benutzer aufgrund der einteiligen Ausbildung des Kabelraumes diesen nicht öffnen, wodurch die Sicherheit beim Betrieb des Haushaltsgerätes erhöht wird. Mehrteilig ausgebildete Kabelräume bergen insbesondere die Gefahr, dass ein Benutzer das Verschließen des Kabelraumes vergisst und das Netzanschlusskabel mit einer Heizeinrichtung oder heißen Teilen des Haushaltsgerätes in Berührung kommt und beschädigt wird. Ferner sind durch die einteilige Ausbildung des Gehäuseteils die Anforderungen an die Fertigungsgenauigkeit für die Begrenzungselemente geringer als bei der Fertigung mehrerer Teile, die zur Bildung des Kabelraumes zusammengefügt werden müssen.

Durch eine bevorzugte Gestaltung des Kabelraumes gemäß der Erfindung mit zwei einander gegenüberliegenden, zueinander komplementären Begrenzungsseiten, die durch entsprechende Begrenzungselemente derart gebildet sind, dass die Begrenzungselemente einer ersten komplementären Begrenzungsseite in einer Vorzugsrichtung fluchtend zu Zwischenräumen der zweiten komplementären Begrenzungsseite angeordnet sind und dass umgekehrt die Begrenzungselemente der zweiten komplementären Begrenzungsseite in der Vorzugsrichtung fluchtend zu Zwischenräumen der ersten komplementären Begrenzungsseite angeordnet sind, wird ermöglicht, dass das Gehäuseteil auf besonders einfache und kostengünstige Weise zusammen mit den Begrenzungselementen einteilig herstellbar ist. Denn zur Bildung des Kabelraumes können bei der Herstellung des Gehäuseteils bewegliche Stempel eingesetzt werden, die entlang der Vorzugsrichtung in eine verzahnte Stellung bewegbar sind. Ferner werden durch die Zwischenräume in den komplementären Begrenzungsseiten Materialkosten gespart. Der Kabelraum ist zwischen den beiden Begrenzungsseiten angeordnet, wobei noch weitere Begrenzungselemente zur Bildung des Kabelraumes vorgesehen sein können.

Eine weitergehende Vereinfachung des Herstellungsverfahrens gemäß der Erfindung und eine Einsparung von Materialkosten werden durch eine Ausführungsform erzielt, bei der eine der komplementären Begrenzungsseiten durch eine Außenwand des Gehäuseteils gebildet wird. Als Außenwand wird eine Wand des Gehäuseteils bezeichnet, die zugleich eine Außenwand des elektrischen Haushaltsgerätes bildet.

Die Gestaltung einer Form für die Herstellung des Gehäuseteils ist besonders einfach, wenn der Kabelraum quaderförmig ist, und die Begrenzungselemente der komplementären Begrenzungsseiten als parallel zueinander verlaufende Stege ausgebildet sind. Vorzugsweise sind die Zwischenräume zwischen den Stegen kleiner als der Durchmesser eines in den Kabelraum aufzunehmenden Netzanschlusskabels, so dass das Netzanschlusskabel nicht zwischen den einzelnen Begrenzungselementen herausragen kann.

Um eine weitere vorteilhafte Kabelführung gemäß der Erfindung zu realisieren, weist der Kabelraum vorzugsweise eine geräteinterne Kabeldurchgangsöffnung und eine nach außen führende Kabeldurchgangsöffnung für das Netzanschlusskabel auf. Ferner können Mittel zur Zugentlastung des Netzanschlusskabels und/oder ein Fach zur Aufnahme eines Netzanschlusssteckers des Netzanschlusskabels einteilig mit dem Gehäuseteil ausgebildet sein.

Ferner betrifft die Erfindung ein elektrisches Haushaltsgerät, welches ein elektrisches Netzanschlusskabel mit einem Netzanschlussstecker zum Anschließen an eine Netzsteckdose und ein erfindungsgemäßes Gehäuseteil aufweist, wobei durch das erfindungsgemäße Gehäuseteil die bereits genannten Vorteile erzielt werden.

Um zu verhindern, dass das Netzanschlusskabel und/oder die Begrenzungselemente des Kabelraumes durch Hitze beschädigt werden, sind die Begrenzungselemente in dem elektrischen Haushaltsgerät vorzugsweise derart angeordnet, dass sie von der Heizeinrichtung und beheizten Teilen des Haushaltsgerätes beabstandet sind. Als beheizte Teile werden Teile des Haushaltsgerätes bezeichnet, die entweder direkt beheizt werden, wie beispielsweise die Ölwanne in einer Friteuse, oder die durch Wärmeübertrag während des Betriebes derart heiß werden, dass eine Berührung des Netzanschlusskabels und/oder der Begrenzungselemente Beschädigungen derselben verursachen würde.

Weitere vorteilhafte Verfahrensmerkmale eines Herstellungsverfahrens gemäß der Erfindung für ein Gehäuseteil ergeben sich weitgehend aus den obigen Erläuterungen zu dem Gehäuseteil und dem elektrischen Haushaltsgerät, umgesetzt in verfahrenstechnische Aspekte des Herstellungsverfahrens.

Die Erfindung wird im Folgenden anhand von bevorzugten Ausführungsformen als Beispiele mit Bezug auf Zeichnungen beschreiben.
Fig. 1 zeigt eine perspektivische Ansicht eines unteren Gehäuseteils einer Friteuse in teilweise aufgebrochener Darstellung:
Fig. 2 zeigt das in Fig. 1 dargestellte Gehäuseteil in einer Schnittansicht entlang der Fläche II-II in Fig. 1;
Fig. 3 zeigt in einer Schnittansicht einen Teil einer Form für ein Gehäuseteil, wobei zwei Stempel gezeigt sind, die in einer verzahnten Stellung angeordnet sind.

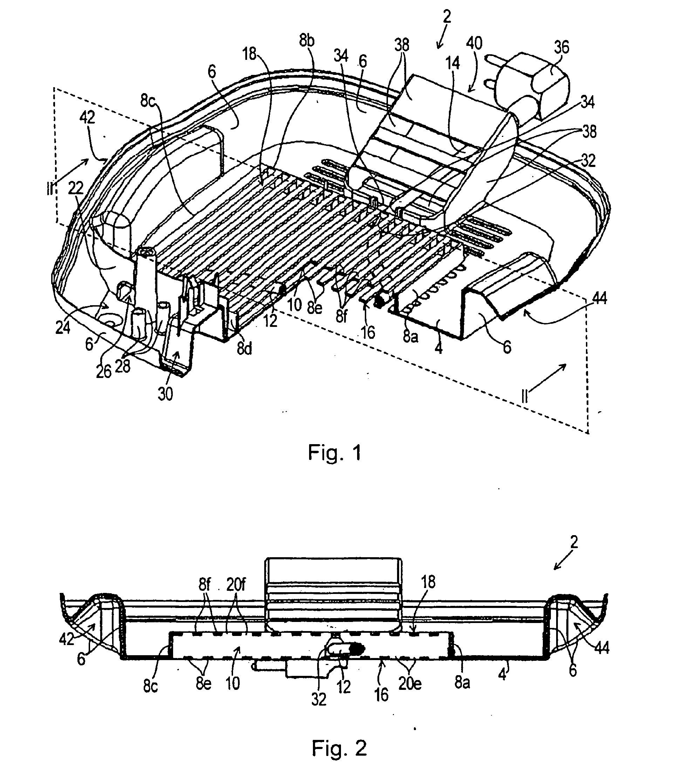

Im Folgenden wird eine bevorzugte Ausführungsform eines erfindungsgemäßen Gehäuseteils unter Bezugnahme auf die Figuren 1 und 2 erläutert, in denen ein unteres Gehäuseteil bzw. Bodenteil 2 einer Friteuse gezeigt ist. Das Bodenteil 2 weist eine mit Öffnungen versehene Bodenplatte 4 und Seitenwände 6 auf, die umfangsseitig der Bodenplatte 4 angeordnet sind und sich von der Bodenplatte 4 im Wesentlichen nach oben erstrecken. Die Bodenplatte 4 und die Seitenwände 6 sind einteilig ausgebildet.

Das gezeigte Bodenteil 2 ist ausgelegt, den unteren Teil einer Friteuse zu bilden. Es soll also unterhalb einer (nicht gezeigten) beheizbaren Ölwanne der Friteuse angeordnet sein. Ferner ist vorgesehen, dass das Bodenteil 2 fest und formschlüssig mit den oberhalb angrenzenden Teilen der Friteuse verbunden und nur zu Reparaturzwecken abzunehmen ist. Solch eine Verbindung ist beispielsweise durch eine Schraubverbindung realisierbar.

Es sind Begrenzungselemente 8a, 8b, 8c, 8d, 8e, 8f gezeigt, die einen Kabelraum 10 zur Aufnahme mindestens eines Abschnitts 12 eines Netzanschlusskabels 14 der Friteuse bilden und einteilig mit dem Bodenteil 2 aus Kunststoff gebildet sind. Vorzugsweise wird ein Kunststoffmaterial verwendet, das für die Verwendung in einem Spritzgussverfahren geeignet ist. Der Kabelraum 10 hat die Form eines flachen Quaders, der flach entlang der Bodenplatte 4 verläuft, so dass eine untere Begrenzungsseite 16 des Kabelraumes 10 durch die Bodenplatte 4 gebildet wird. Die seitlichen Begrenzungselemente 8a, 8b, 8c, 8d des Kabelraums 10 sind als massive Wände ausgebildet.

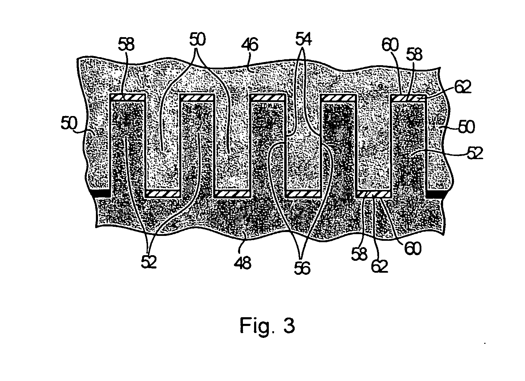

Die untere Begrenzungsseite 16 ist komplementär zu der oberen Begrenzungsseite 18 ausgebildet, so dass ein vorteilhaftes Herstellungsverfahren für das Bodenteil 2 und die Begrenzungselemente 8a, 8b, 8c, 8d, 8e, 8f anwendbar ist. Auf das vorteilhafte Herstellungsverfahren wird unterhalb mit Bezugnahme auf Fig. 3 eingegangen, während im Folgenden die Anordnung der komplementären Begrenzungsseiten 16, 18 zueinander erläutert wird.

Die untere komplementäre Begrenzungsseite 16 wird durch eine Vielzahl von unteren Begrenzungselementen 8e gebildet, die als Stege ausgebildet sind. Die Stege sind parallel zueinander ausgerichtet und voneinander beabstandet. Demgemäß weist die untere komplementäre Begrenzungsseite 16 Zwischenräume 20e zwischen den einzelnen unteren Begrenzungselementen 8e auf. Entsprechend wird die obere komplementäre Begrenzungsseite 18 durch obere Begrenzungselemente 8f gebildet, die als parallel ausgerichtete und voneinander beabstandete Stege ausgebildet sind, so dass auch die obere komplementäre Begrenzungsseite 18 Zwischenräume 20f zwischen den einzelnen oberen Begrenzungselementen 8f aufweist. In Fig. 2 ist ersichtlich, dass die oberen Begrenzungselemente 8f, in Richtung der Flächennormale der Bodenplatte 4 betrachtet, im Wesentlichen fluchtend zu den Zwischenräumen 20e der unteren Begrenzungsseite 16 angeordnet sind. Umgekehrt sind auch die unteren Begrenzungselemente 8e, in Richtung der Flächennormale der Bodenplatte 4 betrachtet, im Wesentlichen fluchtend zu den Zwischenräumen 20f der oberen Begrenzungsseite 18 angeordnet. Die Zwischenräume 20e, 20f der oberen und der unteren Begrenzungsseite 16, 18 sind kleiner als der Durchmesser des Netzanschlusskabels 14 gewählt, so dass eine Schlaufe des Netzanschlusskabels 14 nicht durch einen Zwischenraum 20e, 20f aus dem Kabelraum 10 herausragen kann.

In einem seitlichen Begrenzungselement 8d des Kabelraums ist eine (nicht gezeigte) geräteinterne Kabeldurchgangsöffnung angeordnet. Durch diese wird ein (nicht gezeigter) Endabschnitt des Netzanschlusskabels 14, der keinen Netzanschlussstecker aufweist und zum Verbinden mit den elektronischen Einrichtungen des Haushaltsgerätes vorgesehen ist, aus dem Kabelraum 10 herausgeführt. Das Bodenteil 2 weist eine Zwischenwand 22 auf, die den Innenraum des Bodenteils 2 unterteilt. Die Zwischenwand 22 trennt einen elektrischen Anschlussbereich 24 des Haushaltsgerätes von dem Teilraum des Bodenteils 2, in welchem der Kabelraum 10 angeordnet ist, ab. Dadurch ist der elektrische Anschlussbereich 24 weitgehend vor Verschmutzungen und Feuchtigkeit geschützt. Die Zwischenwand 22 weist eine Durchtrittsöffnung 26 auf, so dass der entsprechende Endabschnitt des Netzanschlusskabels 14 durch die geräteinterne Kabeldurchgangsöffnung aus dem Kabelraum 10 heraus und anschließend durch die benachbart angeordnete Durchtrittsöffnung 26 in den elektrischen Anschlussbereich 24 des Haushaltsgerätes führbar ist.

In dem elektrischen Anschlussbereich 24 sind Mittel zur Zugentlastung des Netzanschlusskabels 14 in Form dreier Säulen 28 vorgesehen, die einteilig mit dem Bodenteil 2 ausgebildet sind. Der entsprechende Endabschnitt des Netzanschlusskabels 14 wird zur Zugentlastung auf bekannte Weise schlangenförmig um die Säulen 28 geführt und das Kabelende wird an einer Kontaktstelle 30 mit den (nicht gezeigten) elektrischen Geräteanschlüssen des Haushaltsgerätes verbunden. Hierfür kann an der Kontaktstelle 30 ein Klemmmechanismus vorgesehen sein. Die elektrischen Geräteanschlüsse können beispielsweise zu einer Steuerung und/oder Heizeinrichtung der Friteuse führen. Durch die Zugentlastung wird verhindert, dass durch Zugbelastung an dem Netzanschlusskabel 14 der elektrische Kontakt zwischen dem Netzanschlusskabel 14 und den Geräteanschlüssen unterbrochen wird.

Gegenüberliegend der geräteinternen Kabeldurchgangsöffnung ist an dem seitlichen Begrenzungselement 8b eine nach außen führende Kabeldurchgangsöffnung 32 angeordnet. Durch die nach außen führende Kabeldurchgangsöffnung 32 des Kabelraums 10 und eine nachfolgend angeordnete Gehäuseöffnung 34 des Bodenteils 2 erstreckt sich der steckerseitige Endabschnitt des Anschlusskabels 14 aus dem Bodenteil 2 nach außen. Ein Netzanschlussstecker 36 an dem steckerseitigen Ende des Anschlusskabels 14 ist so groß, dass er nicht durch die Gehäuseöffnung 34 durchführbar ist und damit nicht in den Innenbereich des Bodenteils 2 gelangen kann.

Die Gehäuseöffnung 34 des Bodenteils 2 ist relativ zu der Seitenwand 6 des Bodenteils 2 zurückversetzt. Ferner sind angrenzend an die Gehäuseöffnung 34 Wandelemente 38 angeordnet, die zu der Seitenwand 6 vorführen und ein Fach 40 für den Netzanschlussstecker 36 bilden, so dass dieser bei vollständig in den Kabelraum 10 eingezogenem Anschlusskabel 14 nicht über das Bodenteil 2 herausragt.

Ferner soll verhindert werden, dass das in dem Bodenteil 2 befindliche Netzanschlusskabel 14 mit einer (nicht gezeigten) Heizeinrichtung der Friteuse oder beheizten Teilen der Friteuse in Berührung kommt. Demgemäß ist jeweils nur ein geringer Abstand zwischen der geräteinternen Kabeldurchgangsöffnung und der Durchtrittsöffnung 26 der Zwischenwand 22 sowie zwischen der nach außen führenden Kabeldurchgangsöffnung 32 und der Gehäuseöffnung 34 vorgesehen. Dadurch wird verhindert, dass sich zwischen dem Kabelraum 10 und einer Wand 6, 22 des Bodenteils 2 Schlaufen des Netzanschlusskabels 14 bilden, die nach oben zu der Heizeinrichtung und/oder beheizten Teilen der Friteuse ragen.

Auch der in dem Kabelraum 10 befindliche Abschnitt 12 des Netzanschlusskabels und die Begrenzungselemente 8a, 8b, 8c, 8d, 8e, 8f sollen weit genug von der Heizeinrichtung und/oder beheizten Teilen der Friteuse entfernt sein, so dass eine Beschädigung des Anschlusskabels 14 und der Begrenzungselemente 8a, 8b, 8c, 8d, 8e, 8f durch Hitze vermieden wird. In der Schnittansicht der Fig. 2 ist ersichtlich, dass der Kabelraum 10 und die Begrenzungselemente 8a, 8b, 8c, 8d, 8e, 8f weniger weit nach oben ragen als die Seitenwände 6 des Bodenteils 2, so dass die Begrenzungselemente 8a, 8b, 8c, 8d, 8e, 8f und das Netzanschlusskabel 14 von der oberhalb angeordneten beheizbaren Ölwanne und deren Heizeinrichtung beabstandet sind.

An einander gegenüberliegenden Seitenwänden 6 des Bodenteils 2 sind jeweils Einbuchtungen 42, 44 ausgebildet, die ein bequemes Greifen und Anheben der Friteuse an deren Bodenteil 2 ermöglichen.

Im Folgenden wird mit Bezugnahme auf Fig. 3 ein vorteilhaftes Herstellungsverfahren für das Bodenteil 2, insbesondere für die Begrenzungselemente 8a, 8b, 8c, 8d, 8e, 8f, die den Kabelraum 10 allseitig begrenzen, erläutert. Hierfür wird eine Form bereitgestellt, in welcher das Bodenteil 2 mitsamt den allseitig angeordneten Begrenzungselementen 8a, 8b, 8c, 8d, 8e, 8f in einem Kunststoff-Formungsgang einteilig aus Kunststoff herstellbar ist. Als Kunststoff-Formungsverfahren wird vorzugsweise ein Spritzgussverfahren angewendet, es können jedoch auch weitere Kunststoff-Formungsverfahren, wie beispielsweise Kunststoffblasverfahren angewendet werden. Die Gestaltung der Form zur Bildung des Teils der Bodenplatte 4, der außerhalb des Kabelraums 10 angeordnet ist, der Seitenwände 6 und weiterer Teile des Bodenteils 2, die außerhalb der Begrenzungselemente 8a, 8b, 8c, 8d, 8e, 8f angeordnet sind, liegt im Können des Durchschnitt-Fachmanns.

Zur Bildung der Begrenzungselemente 8a, 8b, 8c, 8d, 8e, 8f des Kabelraums 10 weist die Form bewegliche Stempel auf, die zur Durchführung des Kunststoff-Formungsganges in eine ineinander verzahnte Stellung positioniert werden. Fig. 3 zeigt in einer Schnittansicht gemäß der Fläche II-II der Fig. 1 einen Ausschnitt der Form zur Bildung des Bodenteils 2 mit bereits eingefülltem Kunststoff. In Fig. 3 ist ein oberer und ein unterer Stempel 46, 48 gezeigt, wobei der obere Stempel 46 voneinander beabstandete, nach unten ragende Rippen 50 und der untere Stempel 48 komplementär dazu nach oben ragende Rippen 52 aufweist, die ebenfalls voneinander beabstandet sind. Die hierbei verwendeten Richtungsangaben beziehen sich lediglich auf die in Fig. 3 gezeigte Ansicht und sollen nicht einschränkend ausgelegt werden.

Die Rippen 50, 52 sind derart ausgebildet, dass der obere Stempel 46 und der untere Stempel 48 in eine ineinander verzahnte Stellung bewegbar sind, wie dies in Fig. 3 gezeigt ist. Demzufolge passen die Rippen 50 des oberen Stempels 46 bezüglich der Breite formschlüssig in die Zwischenräume zwischen den Rippen 52 des unteren Stempels 48 und umgekehrt die Rippen 52 des unteren Stempels 48 in die Zwischenräume zwischen den Rippen 50 des oberen Stempels. Seitenflächen 54 der nach unten ragenden Rippen 50 liegen an Seitenflächen 56 der nach oben ragenden Rippen 52 an, wobei die Seitenflächen 54, 56 im Wesentlichen vertikal angeordnet sind.

Die Stempel 46, 48 werden nur so weit ineinander verzahnt, dass zwischen den Spitzen 58 der Rippen 50, 52 und dem Boden 60 der entsprechenden Zwischenräume ein Freiraum 62 frei bleibt, in welchen Kunststoff zur Bildung der Stege der Begrenzungselemente 8e, 8f eingefüllt wird. In dem verzahnten Bereich der Rippen 50, 52, in dem sich die Rippen überlappen, sind keine Hohlräume, in die Kunststoff einfüllbar ist. Demgemäß entsteht bei dem fertigen Bodenteil 2 in diesem überlappenden Bereich der Rippen 50, 52 ein Freiraum in Form des Kabelraumes 10. Die Breite der Rippen 50, 52 verjüngt sich leicht zu der jeweiligen Spitze 58 der Rippe 50, 52 hin, so dass die Seitenflächen 54, 56 Entformungsschrägen bilden, die nach dem Erstarren des eingefüllten Kunststoffs ein Auseinanderbewegen der Stempel 46, 48 und ein Herauslösen des Bodenteils 2 (mitsamt dessen Begrenzungselementen 8a, 8b, 8c, 8d, 8e, 8f) aus der Form ermöglichen. Auch in Längsrichtung der Rippen 50, 52, die senkrecht zu der in Fig. 3 gezeigten Ebene verläuft, verjüngen sich die Rippen 50, 52 leicht zu deren jeweiliger Spitze 58 hin, so dass die (nicht gezeigten) vorderen und hinteren Seitenflächen der Rippen 50, 52 ebenfalls Entformungsschrägen bilden. Da die Entformungsschrägen der vorderen bzw. hinteren Seitenflächen der nach unten ragenden Rippen 50 entgegengesetzt zu den vorderen bzw. hinteren Seitenflächen der nach oben ragenden Rippen 52 geneigt sind, entsteht an der Innenwand der Begrenzungselemente 8b und 8d eine entsprechende Strukturierung, die durch die abwechselnde Neigung der Rippen 50, 52 an deren vorderen bzw. hinteren Ende bedingt ist. Diese Strukturierung ist in Fig. 1 an der Innenwand des Begrenzungselementes 8b gezeigt.

Benachbart zu den Rippen 50, 52 sind (nicht gezeigte) äußere Formteile angeordnet, so dass zwischen diesen und den Rippen 50, 52 ein Freiraum verbleibt, in welchen Kunststoff zur Bildung der seitlichen Begrenzungselemente 8a, 8b, 8c, 8d, die als durchgehende Wände vorgesehen sind, einfüllbar ist.

Nach Erstarren des in die Form eingefüllten Kunststoffs werden die Stempel 46, 48 auseinander bewegt und das Bodenteil 2 aus der Form herausgenommen. Zum Einführen eines Netzanschlusskabels 14 durch den allseitig begrenzten, einteilig ausgebildeten Kabelraum 10 in den elektrischen Anschlussbereich 24 wird vorzugsweise ein speziell ausgebildeter Einführtrichter mit einem Trichterabschnitt und einem daran anschließenden Einführrohr verwendet. Das Einführrohr wird von außen durch die Gehäuseöffnung 34, die nach außen führende Kabeldurchgangsöffnung 32 des Kabelraums 10, durch den Kabelraum 10 hindurch, durch die geräteinterne Kabeldurchgangsöffnung des Kabelraums 10 und anschließend durch die Durchtrittsöffnung 26 der Zwischenwand 22 positioniert. Anschließend wird der Endabschnitt des Netzanschlusskabels 14, der keinen Netzanschlussstecker 36 aufweist und zum Verbinden mit den elektronischen Einrichtungen des Haushaltsgerätes vorgesehen ist, durch das Einführrohr bis in den elektrischen Anschlussbereich geführt. Nach Fixieren des Endabschnittes des Netzanschlusskabels 14 in dem elektrischen Anschlussbereich 24 wird der Einführtrichter herausgenommen.

Die Erfindung ist nicht auf die beispielhaft gezeigten Ausführungsformen der Figuren 1 bis 3 beschränkt. Die Erfindung ergibt sich vielmehr aus einer fachmännischen Gesamtbetrachtung der Ansprüche, der Beschreibung, der beispielhaften Ausführungsformen und der nachfolgenden Varianten, die einem Fachmann Hinweise auf weitere alternative Ausführungsformen geben sollen.

Insbesondere kann eine andere Formgebung für die komplementären Begrenzungselemente, welche die komplementären Begrenzungsseiten bilden, gewählt werden. Anstatt der gezeigten linearen Stegform sind auch geschwungene oder anderweitig gekrümmte Begrenzungselemente realisierbar, die auf die beschriebene Weise zueinander komplementär ausgebildet sind. Ferner müssen die komplementären Begrenzungsseiten nicht als flache Ebenen ausgebildet sein. Beispielsweise kann zumindest eine komplementäre Begrenzungsseite eine Ausbauchung aufweisen. Demgemäß ist der Kabelraum nicht nur auf die Form eines Quaders beschränkt. Auch können die weiteren Begrenzungselemente, die nicht komplementär zueinander sind, nicht nur als massive Wände ausgebildet, sondern auch mit Öffnungen oder Zwischenräumen versehen sein.

Das erfindungsgemäße Gehäuseteil ist auch als seitliches Gehäuseteil oder als Deckelteil eines elektrischen Haushaltsgerätes realisierbar. Vorteilhaft ist die parallele Ausrichtung der komplementären Begrenzungsseite bzw. Begrenzungsseiten relativ zu einer entsprechenden Gehäuseaußenwand des Gehäuseteils, insbesondere die Bildung einer komplementären Begrenzungsseite durch die Gehäuseaußenwand. Es kann aber auch eine geneigte oder senkrechte Ausrichtung der komplementären Begrenzungsseite bzw. Begrenzungsseiten relativ zu einer Gehäuseaußenwand des Gehäuseteils vorgesehen sein.

Anstatt oder zusätzlich zu der gezeigten Anordnung der Säulen, um welche das Netzanschlusskabel schlangenartig zur Zugentlastung geführt wird, können auch anderweitige Mittel zur Zugentlastung an dem Gehäuseteil vorgesehen sein, wie beispielsweise eine Klemmvorrichtung, in die der entsprechende Endabschnitt des Netzanschlusskabels eingeklemmt wird.

In der gezeigten Ausführungsform führen beide Enden des Netzanschlusskabels aus dem Kabelraum heraus. Alternativ kann auch eine Kontaktstelle innerhalb des Kabelraums vorgesehen sein, an welcher das Kabelende des Netzanschlusskabels, das keinen Netzanschlussstecker aufweist, mit elektrischen Geräteanschlüssen des Haushaltsgerätes verbunden wird. Auch kann eine Gehäuseöffnung und eine nach außen führende Kabeldurchgangsöffnung des Kabelraumes derart groß sein, dass der elektrische Netzanschlussstecker bis in den Kabelraum einführbar ist.

Zusätzlich kann in dem Fach für den Netzanschlussstecker, das in einer Seitenwand des Gehäuseteils ausgebildet ist, eine Haltevorrichtung angeordnet sein, durch die der Netzanschlussstecker in dem Fach gehalten wird. Ferner kann ein Einziehmechanismus zum Einziehen des Netzanschlusskabels in den Kabelraum sowie eine Führungsvorrichtung zum Führen des Netzanschlusskabels vorgesehen sein. Die Führungsvorrichtung ist vorzugsweise im Bereich der nach außen führenden Kabeldurchgangsöffnung des Kabelraumes angeordnet und sorgt dafür, dass das Netzanschlusskabel bequem in den Kabelraum hinein und aus diesem heraus bewegbar ist.

## Patentansprüche

1. Gehäuseteil für ein elektrisches Haushaltsgerät mit einem Kabelraum (10) zur Aufnahme mindestens eines Abschnittes (12) eines elektrischen Netzanschlusskabels (14), **dadurch gekennzeichnet, dass** der Kabelraum (10) ihn allseitig begrenzende Begrenzungselemente (8a, 8b, 8c, 8d, 8e, 8f) aufweist, die zusammen mit dem Gehäuseteil (2) einteilig aus Kunststoff gebildet sind.

2. Gehäuseteil nach Anspruch 1, **dadurch gekennzeichnet, dass** der Kabelraum (10) zwei einander gegenüberliegende, zueinander komplementäre Begrenzungsseiten (16, 18) aufweist.

3. Gehäuseteil nach Anspruch 2, **dadurch gekennzeichnet, dass** die die komplementären Begrenzungsseiten (16, 18) bildenden Begrenzungselemente (8e, 8f) derart ausgebildet sind, dass die Begrenzungselemente (8e) einer ersten komplementären Begrenzungsseite (16) fluchtend zu Zwischenräumen (20f) der zweiten komplementären Begrenzungsseite (18) angeordnet sind.

4. Gehäuseteil nach einem der vorhergehenden Ansprüche, **dadurch gekennzeichnet, dass** der Kabelraum (10) quaderförmig ist.

5. Gehäuseteil nach einem der Ansprüche 2 bis 4, **dadurch gekennzeichnet, dass** eine der komplementären Begrenzungsseiten (16) durch eine Außenwand (4) des Gehäuseteils (2) gebildet ist.

6. Gehäuseteil nach einem der Ansprüche 2 bis 5, **dadurch gekennzeichnet, dass** die Begrenzungselemente (8e, 8f) der komplementären Begrenzungsseiten (16, 18) als parallel zueinander verlaufende Stege ausgebildet sind.

7. Gehäuseteil nach Anspruch 6, **dadurch gekennzeichnet, dass** die Zwischenräume (20e, 20f) zwischen den Stegen kleiner als der Durchmesser eines in dem Kabelraum (10) aufzunehmenden Netzanschlusskabels (14) sind.

8. Gehäuseteil nach einem der vorangehenden Ansprüche, **dadurch gekennzeichnet, dass** der Kabelraum (10) eine geräteinterne Kabeldurchgangsöffnung und eine nach außen führende Kabeldurchgangsöffnung (32) für das Netzanschlusskabel (14) aufweist.

9. Gehäuseteil nach mindestens einem der vorangehenden Ansprüche, **dadurch gekennzeichnet, dass** Mittel zur Zugentlastung (28) des Netzanschlusskabels (14) und ein Fach (40) zur Aufnahme eines Netzanschlusssteckers (36) des Netzanschlusskabels (14) einteilig mit dem Gehäuseteil (2) ausgebildet sind.

10. Elektrisches Haushaltsgerät, enthaltend ein elektrisches Netzanschlusskabel (14) mit einem Netzanschlussstecker (36) zum Anschließen an eine Netzsteckdose, **dadurch gekennzeichnet, dass** das elektrische Haushaltsgerät ein Gehäuseteil (2) nach einem der vorangehenden Ansprüche aufweist.

11. Elektrisches Haushaltsgerät nach einem der vorhergehenden Ansprüche, **dadurch gekennzeichnet, dass** dieses eine elektrische Heizeinrichtung aufweist und dass die den Kabelraum (10) begrenzenden Begrenzungselemente (8a, 8b, 8c, 8d, 8e, 8f) des Gehäuseteils (2) derart angeordnet sind, dass sie von der Heizeinrichtung und beheizten Teilen des Haushaltsgeräts beabstandet sind.

12. Elektrisches Haushaltsgerät nach einem der vorhergehenden Ansprüche, **dadurch gekennzeichnet, dass** es eine Fritteuse ist, bei der das Gehäuseteil als Bodenteil (2) unterhalb einer beheizbaren Ölwanne der Fritteuse ausgebildet ist.

13. Herstellungsverfahren für ein Gehäuseteil eines elektrischen Haushaltsgeräts mit einem Kunststoff-Formungsgang, insbesondere einem Spritzguss-Formungsgang, **dadurch gekennzeichnet, dass** in dem Kunststoff-Formungsgang das Gehäuseteil (2) einteilig mit Begrenzungselementen (8a, 8b, 8c, 8d, 8e, 8f), die einen nach allen Seiten begrenzten Kabelraum (10) bilden, aus Kunststoff hergestellt wird.

14. Herstellungsverfahren nach Anspruch 13, **gekennzeichnet durch** Verwenden einer Form für das Gehäuseteil (2), welche bewegliche Stempel (46, 48) aufweist, die in eine ineinander verzahnte Stellung bewegbar sind, und Durchführen des Kunststoff-Formungsgangs bei verzahnter Stellung der Stempel (46, 48), so dass der Kabelraum (10) in dem verzahnten Bereich der Stempel (46, 48) gebildet wird.

## Claims

1. Housing part for an electrical domestic appliance with a table space (10) for reception of at least one section (12) of an electrical mains connecting cable (14), **characterised in that** the cable base (10) has boundary elements (8a, 8b, 8c, 8d, 8e, 8f) which bound it at all sides and which are integrally formed together with the housing part (2) from plastics material.

2. Housing part according to claim 1, **characterised in that** the cable space (10) has two mutually opposite and mutually complementary boundary sides (16, 18).

3. Housing part according to claim 2, **characterised in that** the boundary elements (8e, 8f) forming the complementary boundary sides (16, 18) are constructed in such a manner that the boundary elements (8e) of a first complementary boundary side (16) are arranged in alignment with intermediate spaces (20f) of the second complementary boundary side (18).

4. Housing part according to any one of the preceding claims, **characterised in that** the cable space (10) is block-shaped.

5. Housing part according to any one of claims 2 to 4, **characterised in that** one of the complementary boundary sides (16) is formed by an outer wall (4) of the housing part (2).

6. Housing part according to any one of claims 2 to 5, **characterised in that** the boundary elements (8e, 8f) of the complementary boundary sides (16, 18) are constructed as webs extending parallel to one another.

7. Housing part according to claim 6, **characterised in that** the intermediate spaces (20e, 20f) between the webs are smaller than the diameter of a mains connecting cable (14) to be received in the cable space (10).

8. Housing part according to any one of the preceding claims, **characterised in that** the cable space (10) has a cable passage opening internal to the apparatus and a cable passage opening (32), which leads outwardly, for the mains connecting cable (14).

9. Housing part according to at least one of the preceding claims, **characterised in that** means for tension relief (28) of the mains connecting cable (14) and a compartment (40) for reception of a mains connecting plug (36) of the mains connecting cable (14) are formed integrally with the housing part (2).

10. Electrical domestic appliance, comprising an electrical mains connecting cable (14) with a mains connecting plug (36) for connection with a mains socket, **characterised in that** the electrical domestic appliance comprises a housing part (2) according to any one of the preceding claims.

11. Electrical domestic appliance according to any one of the preceding claims, **characterised in that** this comprises an electric heating device and that the boundary elements (8a, 8b, 8c, 8d, 8e, 8f), which bound the cable space (10), of the housing part (2) are arranged in such a manner that they are spaced from the heating device and heated parts of the domestic appliance.

12. Electrical domestic appliance according to any one of the preceding claims, **characterised in that** it is a fryer in which the housing part is constructed as a base part (2) below a heatable oil pan of the fryer.

13. Production method for a housing part of an electrical domestic appliance , comprising a plastics material moulding step, particularly an injection moulding step, **characterised in that** in the plastics material moulding step the housing part (2) is produced from plastics material integrally with boundary elements (8a, 8b, 8c, 8d, 8e, 8f) which form a cable space (10) bounded at all sides.

14. Production method according to claim 13, **characterised by** use of a mould for the housing part (2), which mould has movable dies (46, 48) movable into an intercalated setting, and carrying out the plastics material moulding step with intercalated setting of the dies (46, 48) so that the cable space (10) is formed in the intercalated region of the dies (46, 48).

## Revendications

1. Elément de boîtier pour un appareil électroménager comprenant un compartiment à câble (10) destiné à recevoir au moins un segment (12) d'un câble de raccordement au réseau électrique (14), **caractérisé en ce que** le compartiment à câble (10) comprend des éléments de limitation (8a, 8b, 8c, 8d, 8e, 8f) le limitant sur tous les côtés qui sont formés, en plastique, d'une seule partie ensemble avec l'élément de boîtier (2).

2. Elément de boîtier selon la revendication 1, **caractérisé en ce que** le compartiment à câble (10) est pourvu de deux côtés de limitation (16, 18) complémentaires l'un de l'autre opposés l'un à l'autre.

3. Elément de boîtier selon la revendication 2, **caractérisé en ce que** les éléments de limitation (8e, 8f) formant les côtés de limitation complémentaires (16, 18) sont exécutés de manière à ce que les éléments de limitation (8e) d'un premier côté de limitation complémentaire (16) soient disposés alignés avec des espaces intermédiaires (20f) du second côté de limitation complémentaire (18).

4. Elément de boîtier selon l'une des revendications précédentes, **caractérisé en ce que** le compartiment à câble (10) a une forme en parallélépipède rectangle.

5. Elément de boîtier selon l'une des revendications 2 à 4, **caractérisé en ce qu'**un des côtés de limitation complémentaires (16) est formé par une paroi extérieure (4) de l'élément de boîtier (2).

6. Elément de boîtier selon l'une des revendications 2 à 5, **caractérisé en ce que** les éléments de limitation (8e, 8f) des côtés de limitation complémentaires (16, 18) sont exécutés en tant qu'âmes s'étendant parallèlement les unes aux autres.

7. Elément de boîtier selon la revendication 6, **caractérisé en ce que** les espaces intermédiaires (20e, 20f) entre les âmes sont plus petits que le diamètre d'un câble de raccordement au réseau (14) destiné à être reçu dans le compartiment à câble (10).

8. Elément de boîtier selon l'une des revendications précédentes, **caractérisé en ce que** le compartiment à câble (10) est pourvu d'une ouverture de passage de câble interne à l'appareil et d'une ouverture de passage de câble (32) conduisant vers l'extérieur pour le câble de raccordement au réseau (14).

9. Elément de boîtier selon au moins une des revendications précédentes, **caractérisé en ce que** des moyens de décharge de traction (28) du câble de raccordement au réseau (141) et un compartiment (40) pour la réception d'une prise de raccordement au réseau (36) du câble de raccordement au réseau (14) sont exécutés d'une seule partie avec l'élément de boîtier (2).

10. Appareil électroménager, contenant un câble de raccordement au réseau électrique (14) pourvu d'une prise de raccordement au réseau (36) pour le raccordement à une prise secteur, **caractérisé en ce que** l'appareil électroménager comprend un élément de boîtier (2) selon l'une des revendications précédentes.

11. Appareil électroménager selon l'une des revendications précédentes, **caractérisé en ce que** cet appareil comprend un dispositif de chauffage électrique et que les éléments de limitation (8a, 8b, 8c, 8d, 8e, 8f) de l'élément de boîtier (2) limitant le compartiment à câble (10) sont disposés de manière à être situés à une distance du dispositif de chauffage et des parties chauffées de l'appareil ménager.

12. Appareil électroménager selon l'une des revendications précédentes, **caractérisé en ce qu'**il s'agit d'une friteuse dans laquelle l'élément de boîtier est exécuté en tant qu'élément de fond (2) au-dessous d'un bac à huile de la friteuse qui peut être chauffée.

13. Procédé de fabrication pour un élément de boîtier d'un appareil électroménager, comprenant une opération de façonnage d'une matière plastique, notamment une opération de façonnage par moulage par injection, **caractérisé en ce que,** dans l'opération de façonnage d'une matière plastique, l'élément de boîtier (2) est fabriqué d'une seule partie, en matière plastique, avec des éléments de limitation (8a, 8b, 8c, 8d, 8e, 8f) qui forment un compartiment à câble (10) limité sur tous les côtés.

14. Procédé de fabrication selon la revendication 13, **caractérisé par** l'utilisation d'un moule pour l'élément de boîtier (2) qui comprend des moules mâles mobiles (46, 48) qui peuvent être déplacés dans une position d'engrenée l'un dans l'autre et par l'exécution de l'opération de façonnage d'une matière plastique alors que les moules mâles (46, 48) sont dans la position engrenée, de manière à ce que le compartiment à câble (10) soit formé dans la zone engrenée des moules mâles (46, 48).
